# EUROPÄISCHE PATENTSCHRIFT

(11) **EP 2 556 222 B1**
(45) Veröffentlichungstag und Bekanntmachung des Hinweises auf die Patenterteilung: **10.06.2015**
(21) Anmeldenummer: 11711305.0
(22) Anmeldetag: 22.03.2011
(51) Int. Cl.: F01N 3/027, F01N 3/28, F01N 9/00, F01N 13/00, F01N 13/04, F01N 3/20, F01N 3/031

(54) **VERFAHREN UND ABGASBEHANDLUNGSVORRICHTUNG ZUR REGENERATION EINER ABGASREINIGUNGSKOMPONENTE**
METHOD AND WASTE GAS TREATMENT DEVICE FOR REGENERATING A WASTE GAS CLEANING COMPONENT
PROCÉDÉ ET DISPOSITIF DE TRAITEMENT DE GAZ D'ÉCHAPPEMENT POUR LA RÉGÉNÉRATION D'UN COMPOSANT D'ÉPURATION DE GAZ D'ÉCHAPPEMENT

(30) Priorität: 07.04.2010 DE 102010013990
(43) Veröffentlichungstag der Anmeldung: 13.02.2013
(73) Patentinhaber: Emitec Gesellschaft für Emissionstechnologie mbH, 53797 Lohmar (DE)
(72) Erfinder: HODGSON, Jan, 53840 Troisdorf (DE); VORSMANN, Christian, 51105 Köln (DE)
(74) Vertreter: Rössler, Matthias
(86) Internationale Anmeldenummer: PCT/EP2011/054310
(87) Internationale Veröffentlichungsnummer: WO 2011/124465

(56) Entgegenhaltungen:
- EP-A1- 0 699 827
- DE-A1- 3 102 225
- DE-A1- 10 127 782
- JP-A- 7 011 937
- US-A1- 2005 126 160

## Beschreibung

Die vorliegende Erfindung betrifft ein Verfahren zur Regeneration einer Abgasreinigungskomponente und eine Abgasbehandlungsvorrichtung, welche eine Abgasreinigungskomponente und eine Zündvorrichtung umfasst.

Im Abgas von Verbrennungskraftmaschinen sind regelmäßig Partikel enthalten. Bei einem Dieselmotor sind dies insbesondere Kohlenstoff-Verbindungen (wie insbesondere Asche, Ruß, etc.), aber auch Sulfate, Nitrate, organische Verbindungen und dergleichen. Bei Verbrennungskraftmaschinen, insbesondere bei Dieselmotoren, ist es infolge von verschärften Emissionsgrenzwerten notwendig, im Abgas enthaltene Partikel aus dem Abgasstrom zu entfernen sowie in der Abgasleitung zurückzuhalten bzw. umzuwandeln. Zu diesem Zweck ist eine Vielzahl unterschiedlicher Partikelabscheider bzw. Partikelfilter bekannt. Gerade bei den porösen und/oder geschlossenen Filtersystemen (wie z. B. so genannte Wandfluss-Filter, Tiefenfilter, etc.) muss im Betrieb des Abgassystems sichergestellt werden, dass die Filtersysteme nicht verstopfen.

Außerdem ist zu berücksichtigen, dass die Partikel des Abgases sich zumindest teilweise auch an katalytisch aktiven Oberflächen ablagern können (z. B. an Katalysator-Trägerkörpern).

Aus diesem Gründen ist bekannt, dass die in bzw. an einer solchen Abgasreinigungskomponente abgelagerten Partikel zumindest zeitweise entfernt werden müssen, was auch als Regeneration der Abgasreinigungskomponente bezeichnet wird. Dies erfolgt bevorzugt in der Weise, dass die Partikel verbrannt, also oxidiert, werden. Hierfür sind regelmäßig relativ hohe Temperaturen notwendig, die dadurch erreicht werden, dass die Abgasreinigungskomponente und/oder das Abgas in der Umgebung der zu verbrennenden Partikel gezielt erhöht wird.

Für eine Erhitzung der Abgasreinigungskomponente ist bekannt, die Trägerstruktur mit einer elektrischen Heizung auszuführen, die bedarfsgerecht aktiviert wird. Ein entsprechendes Beispiel für einen offenen Partikelfilter gibt die DE 201 17 659 U1 an. Für ein geschlossenes Filtersystem sei hier beispielsweise auf die DE 10 2006 044503A1 verwiesen. Bei diesen Systemen sind jedoch der erhöhte technische Aufwand und der Energieverbrauch zu berücksichtigen.

US 2005/0126160 A offenbart einen Kondensator einer Energieversorgung für eine Hochspannungs-Zündvorrichtung eines Brenners, welcher einen Partikelfilter (DPF) als Abgasreinigungskomponente erwärmen soll Die Hochspannungseinrichtung scheint eine Zündvorrichtung für einen Brenner zu betreffen. DE 101 27 782 B4 offenbart das Aufheizen einer Abgasreinigungskomponente wie einem Partikelfilter zur Regeneration mittels einer zweiten Batterie oder einem Kondensator als Energiespeicher, wobei es sich um ein Hybridfahrzeug handelt, welches zwei Batterien und eine Elektroleistungsbedarfsberechnungseinrichtung aufweist.

Darüber hinaus ist bekannt, gezielt eine exotherme Reaktion an bzw. in der Nähe der zu regenerierenden Abgasreinigungskomponente zu bewirken, z. B. indem Kohlenwasserstoffe auf einen (Edelmetall aufweisenden) Oxidationskatalysator aufgegeben werden. Diese exotherme Reaktion führt zu einer Erhitzung des Abgases und kann damit die gewünschte Regeneration unterstützen. Hierzu ist anzumerken, dass durch die zusätzliche Einspritzung von Kraftstoff und ggf. auch die Einleitung von Sauerstoff in die Abgasleitung eine für die Katalysatoren unabgestimmte Zusammensetzung des Abgases und damit auch schlechtere Abgasqualitäten generiert werden.

Die oben bereits angesprochenen Probleme bei der Regeneration lassen erkennen, dass hier Bedarf für eine Verbesserung besteht. Insbesondere sind die vorstehend genannten Apparaturen und Methoden anfällig, wenn das Abgassystem von Abgas mit einem relativ großen Durchsatz und tiefen Temperaturen durchströmt wird. Gerade in diesem Fall, wie er insbesondere bei neueren Diesel-Motoren eintritt, ist die Kühlwirkung des Abgases auf die elektrischen Heizungssysteme beachtlich.

Aufgabe der Erfindung ist es daher, die mit Bezug auf den Stand der Technik geschilderten Probleme zumindest teilweise zu lösen und insbesondere ein Verfahren und eine Abgasbehandlungsvorrichtung anzugeben, die eine Umsetzung der abgelagerten Ruß- oder Kohlenstoffpartikel mit einfachen technischen Apparaturen und einem möglichst geringem Energieaufwand ermöglichen.

Diese Aufgabe wird gelöst mit einem Verfahren gemäß den Merkmalen des Patentanspruchs 1 und einer Abgasbehandlungsvorrichtung gemäß den Merkmalen des Patentanspruchs 9. Weitere vorteilhafte Ausgestaltungen der Erfindung sind in den abhängigen Patentansprüchen angegeben und im Folgenden näher beschrieben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Demnach wird hier ein

Verfahren zur Regeneration einer Abgasreinigungskomponente, die zumindest einen Wabenkörper, einen Filter, einen Abscheider, einen Katalysator-Trägerkörper, einen Adsorber, einen Impaktor und/oder einen Strömungsmischer umfasst, umfassend wenigstens die folgenden Schritte:
i) Laden wenigstens eines Kondensators,
ii) Aufheizen eines Teilvolumens oder mehrerer Teilvolumina der Abgasreinigungskomponente auf mindestens 900 °C durch Zuführen zumindest eines Teiles der auf dem Kondensator gespeicherten Energie, wobei mindestens ein Zündelement, welches eine in der Abgasreinigungskomponente angeordnete Elektrode und/oder einen in der Abgasreinigungskomponente angeordneten Heizdraht umfasst, dem mindestens einen Teilvolumen die Energie als elektrische Energie zuführt, wobei Strom beim Zuführen der elektrischen Energie das Teilvolumen durchfließt und der Stromfluss das Teilvolumen direkt erhitzt.

Unter einer Abgasreinigungskomponente wird zumindest eine der folgenden Komponenten verstanden: Wabenkörper, Filter, Abscheider, Katalysator-Trägerkörper, Adsorber und Strömungsmischer. Diese Abgasreinigungskomponenten sind regelmäßig in der Abgasleitung bzw. einer Abgasrückführleitung einer Verbrennungskraftmaschine angeordnet und damit dem Abgas ausgesetzt.

Der Kondensator ist ein (passives) elektrisches Bauelement mit der Fähigkeit, elektrische Ladung und damit zusammenhängend Energie zu speichern und bedarfsgerecht wieder abzugeben. Der Kondensator wird bevorzugt mit der Bordspannung eines Kraftfahrzeugs geladen, zurzeit 12 V. Alternativ kann der Kondensator mit einer größeren Spannung geladen werden, die mittels eines DC-DC-Wandlers erzeugt wird. Um eine höhere Ausgangsspannung beim Zuführen der Energie zu erhalten, können mehrere in Reihe geschaltete Kondensatoren jeweils einzeln mit der Bordspannung geladen werden und gemeinsam in Reihenschaltung entladen werden.

Unter einem Teilvolumen der Abgasreinigungskomponente wird ein Raum innerhalb eines äußeren Gehäuses der Abgasreinigungskomponente verstanden, der kleiner als das Gesamtvolumen der Abgasreinigungskomponente ist (inklusive Wandstruktur und darin eingebettete Strömungspassagen für das Abgas). Dies bedeutet insbesondere, dass sowohl ein Bauteil der Abgasreinigungskomponente als auch Medien, wie z: B. Luft, Abgas oder abgelagerte Ruß-/Kohlenstoffpartikel in dem Teilvolumen enthalten sein können. Das Teilvolumen ist insbesondere als der Raum definiert, der bei Zuführen der elektrischen Energie mit Strom durchflossen und dabei direkt durch den Stromfluss erhitzt wird.

Es ist möglich, dass ein Kondensator eine Vielzahl von Teilvolumina gleichzeitig Energie zuführt, es kann aber auch vorgesehen sein, dass jedem Teilvolumen ein einzelner Kondensator zugeordnet ist. Grundsätzlich ist hier jedoch gewünscht, dass der mindestens eine Kondensator die einzige Energiequelle zur Zuführung elektrischer Energie zu dem Teilvolumen ist.

Durch das Erhöhen der Temperatur des Teilvolumens werden zumindest die im Teilvolumen abgelagerte Partikel bzw. die angrenzend an das Teilvolumen abgelagerten Partikel umgesetzt. Das Umsetzen der Partikel meint regelmäßig, dass diese zumindest teilweise in gasförmige Bestandteile umgewandelt werden. Bevorzugt ist hierbei, dass die Temperatur im Teilbereich mindestens 950 °C, besonders bevorzugt mindestens 1000 °C erreicht. Bei einer Temperatur von über 900 °C werden bereits durch Wärmeleitung und/oder Wärmestrahlung auch weiter von dem Teilvolumen entfernte Bereiche abgelagerten Rußes erhitzt.

Das hier vorgeschlagene Verfahren zeichnet sich insbesondere dadurch aus, dass mittels des wenigstens eines Kondensators ein kurzzeitiges, insbesondere nur wenige Sekunden andauerndes Aufheizen des Teilvolumens erfolgt. So kann mit einer solchen Kondensator-Entladung z. B. in weniger als 3 Sekunden oder bevorzugt in maximal 1 Sekunde ein solch hoher Peak-Strom in das (entsprechend limitierte, kleine) Teilvolumen eingebracht werden, dass die für die Regeneration erforderlichen Temperaturen erreicht werden können. Ein hierfür geeigneter Peak-Strom kann mehr als 50 A [Ampere], bevorzugt mindestens 70 A oder sogar mindestens 100 A betragen. Insbesondere wird kurzzeitig eine elektrische Entladung mit deutlich über 500 Watt, z. B. auch mehr als 900 Watt erreicht.

Hierbei ist insbesondere zu berücksichtigen, dass das erfindungsgemäße Verfahren während des Betriebes des Kraftfahrzeuges bzw. während einer Abgasströmung in der Abgasanlage stattfindet. Gerade dieser Aspekt erschwert eine schnelle aktive Regeneration der Abgasreinigungskomponente, weil hierdurch die Reaktionsfreudigkeit der Abgasreinigungskomponente und/oder die Temperatur der Abgasreinigungskomponente verringert sind.

Vorzugsweise wird, ausgehend von dem zumindest einen Teilvolumen, eine Partikel-Abbrennreaktion für ein größeres Volumen der Abgasreinigungskomponente gestartet. Durch das kurzzeitige Erhitzen des Teilvolumens wird beispielsweise eine exotherme Reaktion für die Umsetzung der Partikel im Teilvolumen erzeugt, wobei die dabei freiwerdende Energie eine gleichfalls exotherme Reaktion in den Nachbarbereichen des Teilvolumens auslöst. Ausgehend von dem Teilvolumen kann somit der komplette in der Abgasreinigungskomponente abgelagerte Ruß abgebrannt bzw. umgesetzt werden. Es ist somit nicht nötig, das komplette Abgas oder die ganze Abgasreinigungskomponente zu erwärmen. Während demnach in der Vergangenheit eine lang andauernde Aufheizung der Abgasreinigungskomponente beispielsweise auf eine Temperatur von ca. nur 600 °C erfolgte, wird hier mit einer kurzzeitigen Initialzündung durch eine Peak-Entladung des Kondensators im Teilvolumen energetisch sehr günstig eine komplette Regeneration der Abgasreinigungskomponente erreicht. Es hat sich gezeigt, dass eine Partikel-Abbrennreaktion ab einer Temperatur von 900 °C besonders einfach und umfassend ausgelöst wird.

Besonders vorteilhaft ist es, wenn dem Teilvolumen höchstens 2.000 J [Joule], bevorzugt höchsten 1500 J elektrischer Energie zugeführt wird. In einigen Anwendungsfällen kann es auch ausreichend sein, wenn maximal höchstens 1000 J elektrischer Energie zugeführt wird. Die zugeführte elektrische Energie kann durch die aus dem zumindest einen Kondensator abfließende Energie festgelegt sein. Die angegebene Energiemenge ist ausreichend, um in einem entsprechenden Teilvolumen eine Temperatur zu erzeugen, die eine Umsetzung von Partikeln auslöst, die wiederum eine Abgasreinigungskomponente vollständig regenerieren kann. Auf diese Weise wird in einem kurzen Zeitabschnitt besonders wenig Energie bei der Regeneration einer Abgasreinigungskomponente verbraucht.

Ferner ist es vorteilhaft, wenn innerhalb von maximal 1 s [Sekunde] mindestens 63,2 % der zuvor auf dem Kondensator gespeicherten Energie der Abgasreinigungskomponente zugeführt wird. Ganz besonders bevorzugt ist, wenn diese Energiemenge innerhalb von höchstens 0,1 s oder sogar innerhalb von höchstens 0,01 s bereitgestellt werden. Durch das schnelle Zuführen der Energie wird insbesondere erreicht, dass das aufzuheizende Teilvolumen nicht schon während des Aufheizens übermäßig durch das vorbeiströmende Abgas abgekühlt werden kann, so dass die exotherme Umsetzung konzentriert und sicher ausgelöst werden kann. Eine weitere Energieeffizienzsteigerung des Regenerationsvorgangs kann somit erreicht werden.

Zudem ist es vorteilhaft, wenn in bei aufeinanderfolgenden Aufheizschritten verschiedene Teilvolumina aufgeheizt werden. Die Abgasreinigungskomponente kann mehrere beheizbare Teilvolumina aufweisen, so dass gezielt in den Bereichen Energie zugeführt wird, an denen sich besonders viel Ruß abgelagert hat. Es wird somit über mehrere (hintereinander zeitlich versetzt ablaufende) Aufheizvorgänge eine räumlich gleichmäßige Regeneration der Abgasreinigungskomponente erreicht. Die verschiedenen Teilvolumina können dazu mit dem gleichen Kondensator erhitzt werden, es ist aber auch möglich, dass jeweils einem der Teilvolumina mindestens ein separater Kondensator zugeordnet ist.

Vorzugsweise wird mindestens ein Parameter einer der Abgasreinigungskomponente zugeordnete Verbrennungskraftmaschine oder Abgasanlage gemessen oder berechnet, wobei bei Erreichen eines Grenzwertes des mindestens einen Parameters zumindest einen Teil der auf dem Kondensator gespeicherten Energie dem Teilvolumen zugeführt wird.

Der mindestens eine Parameter kann zum Beispiel wenigstens einen der folgenden Werte umfassen: Betriebsdauer der Verbrennungskraftmaschine, Last der Verbrennungskraftmaschine, Partikelanteil im Abgas der Verbrennungskraftmaschine, Geschwindigkeit des Abgasstroms, Druckabfall über der Abgasreinigungskomponente, Temperatur des Abgases, Temperatur der Abgasreinigungskomponente und Zusammensetzung des Abgases. Das Ereichen, Überschreiten oder Unterschreiten des vorgegebenen Grenzwertes bildet einen Referenzwert dafür, dass eine Regeneration erforderlich ist, wobei ggf. eine Auswertung mehrerer dieser Parameter auch erkennen lässt, ob die Umgebungsbedingungen im Teilvolumen geeignet sind, um die mit dem Kondensator kurzzeitig bereitgestellte Energie eine gewünschte Regeneration ablaufen zu lassen. Weiter können diese Parameter dazu herangezogen werden, um die Energie-Menge und/oder die Energiezufuhr-Zeit und/oder das konkrete Teilvolumen (z. B. Ort, Größe,...) zu definieren, dass aktuell erforderlich ist, um eine effektive und energetisch günstige Regeneration zu erreichen. Das Verfahren wird somit bevorzugt (wiederholt) während des Betriebs der Verbrennungskraftmaschine durchgeführt.

Es ist zudem bevorzugt, dass der Kondensator direkt nach dem Entladen erneut aufgeladen wird, bspw. durch eine Batterie, eine Lichtmaschine, oder eine Energierückgewinnungsvorrichtung, so dass der Kondensator sofort bei Erreichen des Grenzwertes entladen werden kann.

Besonders vorteilhaft ist es, wenn der mindestens eine Kondensator mit einer Anfangsleistung von höchstens 30 W [Watt] geladen wird. Ganz besonders bevorzugt ist, dass dieser mit einer Anfangsleistung von höchstens 10 W oder sogar nur 1 W geladen wird. Eine Anfangsleistung von 10 W kann mit einem herkömmlichen Kabel von einer Energiequelle eines Kraftfahrzeugs zu einer möglicherweise entfernten Abgasreinigungskomponente, an der der Kondensator angeordnet ist, übertragen werden. Daher werden Kabel zur Übertragung großer Leistungen hier nicht benötigt.

Gemäß einem weiteren Aspekt wird auch eine Abgasbehandlungsvorrichtung für einen nebengeordneten Abgasstrang einer Abgasanlage einer Verbrennungskraftmaschine vorgeschlagen, wobei durch den nebengeordneten Abgasstrang maximal 40 %, insbesondere maximal 10%, des Abgases hindurch geleitet wird, umfassend eine Abgasreinigungskomponente, die zumindest einen Wabenkörper, einen Filter, einen Abscheider, einen Katalysator-Trägerkörper, einen Adsorber, einen Impaktor und/oder einen Strömungsmischer umfasst und die ein Teilvolumen oder mehrere Teilvolumina mit jeweils höchstens 1.000 mm³ Volumen aufweist, und wenigstens eine Zündvorrichtung mit mindestens einem Zündelement, mindestens einem Kondensator, mindestens einer Energiequelle und mindestens einer Steuereinrichtung, wobei das mindestens eine Zündelement dem zumindest einen Teilvolumen zugeordnet ist und eine in der Abgasreinigungskomponente angeordnete Elektrode und/oder in der Abgasreinigungskomponente angeordneten Heizdraht umfasst.

Mit einem "nebengeordneten" Abgasstrang ist eine Abgasleitung der Abgasanlage gemeint, durch welche (permanent) nur ein kleiner Anteil des Abgases hindurch geleitet wird, z. B. maximal 40 %, bevorzugt sogar nur maximal 20 % oder sogar nur maximal 10 %. Der Anteil des Abgasvolumenstroms, der durch den nebengeordneten Abgasstrang strömt, kann aktiv verändert und/oder eingestellt werden, es ist jedoch bevorzugt, dass die Geometrie und Auslegung der Abgasanlage so vorgenommen ist, dass (permanent) nur ein solch kleiner Anteil des Abgases der Abgasreinigungskomponente zugeführt wird. Folglich hat eine solche Abgasanlage regelmäßig einen Haupt-Abgasstrang und wenigstens einen Neben-Abgasstrang, wobei im letzteren die Abgasreinigungskomponente mit dem zu erhitzenden Teilvolumen angeordnet ist.

Zündelemente umfassen insbesondere in der Abgasreinigungskomponente angeordnete Elektroden und/oder Heizdrähte, die dem Teilvolumen der Abgasreinigungskomponente die elektrische Energie bzw. die thermische Energie zuführen, um zumindest eine lokale Regeneration der abgelagerten Rußpartikel auszulösen.

Der mindestens eine Kondensator ist bevorzugt nach Art eines Doppelschicht-Kondensators, auch elektrochemische Doppelschicht-Kondensatoren oder Superkondensatoren genannt, ausgeführt. Ein solcher Kondensator hat eine besonders große Energiedichte. Ihre hohe.Kapazität basiert auf der Dissoziation von Ionen in einem flüssigen Elektrolyt, die ein Dielektrikum von wenigen Atomlagen und eine große Elektrodenoberfläche bilden. Es sind, wie Elektrolytkondensatoren, gepolte Bauelemente.

Als Energiequelle kann insbesondere auf das Bordnetz des Kraftfahrzeuges zurückgegriffen werden. Ebenso können andere Energiespeicher (z. B. Batterie) oder Energielieferanten (Generator, thermoelektrischer Generator, etc.) eingesetzt werden.

Die Steuereinrichtung kann in der übergeordneten Steuereinrichtung der Verbrennungskraftmaschine (so genannte Motorsteuerung) integriert sein und kann Parameter der Verbrennungskraftmaschine und der Abgasanlage z. B. mittels geeigneter Sensoren erfassen und/oder rechnerisch bestimmen.

Die erfindungsgemäße Abgasbehandlungsvorrichtung ist insbesondere geeignet oder sogar eingerichtet und ausgelegt, um das erfindungsgemäße Verfahren durchführen zu können. Die Effekte und Varianten, die für das Verfahren erläutert werden, können also auch zur Beschreibung der Abgasbehandlungsvorrichtung herangezogen werden - und umgekehrt.

Das Teilvolumen kann ein klar abgegrenzter, ggf. abgekoppelter, Bereich der Abgasbehandlungsvorrichtung sein. Darüber hinaus ist auch möglich, dass dieses Teilvolumen vom Wirkungsbereich des Zündelements definiert ist, also insbesondere der Bereich, dem Energie direkt (z. B. in elektrischer Form) und/oder unmittelbar zugeführt wird.

Vorzugsweise weist das Teilvolumen ein Volumen von höchstens 1.000 mm³ [Kubikmillimeter] auf. Es wurde herausgefunden, dass mit der zur Verfügung gestellten Energie in einem solchen Teilvolumen eine Abbrehnreaktion initiiert werden kann, um eine vollständige Regeneration der Abgasreinigungskomponente herbeizuführen.

Die Energieeinbringung in das Teilvolumen kann beispielsweise mittels eines Heizdrahtes erfolgen, welcher mit höchstens 30 mm [Millimeter], bevorzugt höchstens 20 mm, Länge und höchstens 2 mm, bevorzugt höchstens 1 mm, Durchmesser ausgeführt ist. Der Heizdraht ist insbesondere so angeordnet, dass sich um ihn herum Partikel bevorzugt ablagern. Durch die Zuführung der Energie zu dem Heizdraht wird zunächst lediglich der Heizdraht erhitzt. Die in der unmittelbaren Umgebung des Teilvolumens abgelagerten Partikel werden von dem Heizdraht soweit erwärmt, dass diese abbrennen und mit der exothermen Reaktion (mittelbar) umliegende Partikel zur Umsetzung antreiben.

Bei einer weiteren Ausgestaltung wird das Teilvolumen von zwei elektrischen Kontakten (Elektroden) begrenzt, z. B. mit einer Höhe von höchstens 8 mm, bevorzugt höchstens 4 mm, und einer Breite von höchstens 5 mm, bevorzugt höchstens 4 mm, und mit einem Abstand zueinander von höchstens 25 mm, bevorzugt höchstens 20 mm. Zwischen den zwei Elektroden kann beim Entladen des Kondensators ein Strom durch die zwischen den Elektroden abgelagerten Ruß-Partikel fließen. Durch den Stromfluss werden die Ruß-Partikel erhitzt und lösten somit eine Ruß-Abbrennreaktion zunächst in dem Teilvolumen aus, die sich weiter ausbreiten kann.

Bei einer weiteren Ausführungsform ist vorgesehen, dass der Kondensator eine Kapazität von höchstens 500 F [Farad], bevorzugt höchstens 100 F, besonders bevorzugt höchstens 10 F, aufweist. Kondensatoren mit einer geringen Kapazität, insbesondere von kleiner als 10 F, sind kostengünstig zu erhalten.

Gemäß einer besonders bevorzugten Ausführungsform umfasst die Abgasanlage einen Radialkatalysator mit einer ersten Stirnseite und einer zweiten Stirnseite, wobei die Abgasreinigungskomponente als Impaktor der zweiten Stirnseite zugeordnet ist.

Bei einem Radialkatalysator tritt der Abgasstrom einer Verbrennungskraftmaschine zentral durch die erste Stirnseite in den Katalysator ein und wird radial abgelenkt. Dabei ist die Abgasbehandlungsvorrichtung so gestaltet, dass der überwiegende Anteil des Abgases umgelenkt und abgeführt wird (Haupt-Abgasstrom). Gegenüberliegend zur ersten Stirnseite ist zudem ein Impaktor vorgesehen, der im Neben-Abgasstrom positioniert ist, also nur von einem geringeren Anteil des Abgases beströmt wird. Da mittels des Radialkatalysators eine Strömungsumlenkung und mit dem Impaktor beispielsweise ein großer Strömungswiderstand gebildet sind, wird hier die gewünschte Aufteilung in einen Hauptstrom und einen Nebenstrom erreicht. Folglich ist bevorzugt, dass der Impaktor als ein Tiefenfilter, wie zum Beispiel eine Filterplatte oder ein Filterschaum, ausgeführt ist und/oder nach Art einer Prallplatte für Partikel ausgebildet ist. Bei dieser Anordnung wird erreicht, dass ein sehr großer Anteil der im Abgas vorhandenen Partikel der Strömungsumlenkung nicht folgt, sondern sich auf bzw. in dem an der zweiten Stirnseite gegenüberliegend angeordneten Impaktor ablagern. Mindestens 90 % der im Abgas enthaltenen Partikel können so auf bzw. in dem (kleinen) Impaktor abgelagert werden. Gerade diese konzentrierte Ablagerung der Partikel hat den Vorteil, dass nur ein sehr kleines Teilvolumen für die Initialzündung erhitzt werden muss. Somit eignet sich das erfindungsgemäße Verfahren gerade für einen solchen Aufbau des Abgassystems.

Schließlich wird auch ein Fahrzeug vorgeschlagen, welches eine erfindungsgemäße Abgasbehandlungsvorrichtung umfasst, die zur Durchführung des erfindungsgemäßen Verfahrens eingerichtet ist. Die für das erfindungsgemäße Verfahren offenbarten Details und Vorteile lassen sich auf die erfindungsgemäße Abgasbehandlungsvorrichtung übertragen und anwenden und umgekehrt.

Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein Kraftfahrzeug mit einer Abgasbehandlungsvorrichtung,
- Fig. 2:: eine Abgasanlage mit einer Abgasbehandlungsvorrichtung,
- Fig. 3:: ein weiteres Ausführungsbeispiel einer Abgasbehandlungsvorrichtung, und
- Fig. 4:: noch ein weiteres Ausführungsbeispiel einer Abgasbehandlungsvorrichtung.

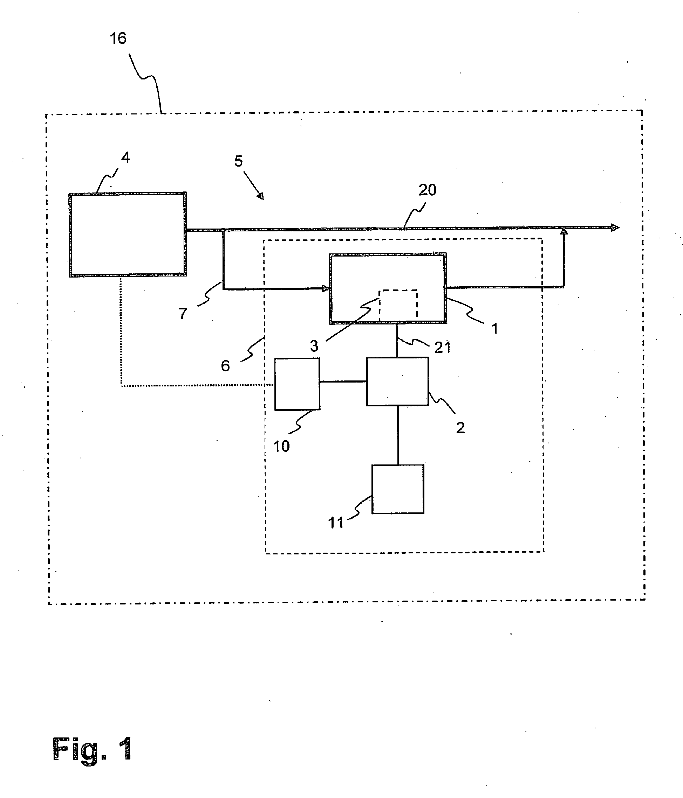

Fig. 1 zeigt schematisch ein Kraftfahrzeug 16 mit einer Verbrennungskraftmaschine 4, an die eine Abgasanlage 5 angeschlossen ist. Die Abgasanlage 5 beinhaltet einen Hauptabgasstrang 20, entlang dem ein Großteil des Abgases geführt und ggf. behandelt wird, und einen nebengeordneten Abgasstrang 7, in dem die erfindungsgemäße Abgasbehandlungsvorrichtung 6 angeordnet ist. Die Abgasbehandlungsvorrichtung 6 umfasst eine Abgasreinigungskomponente 1 mit einem Teilvolumen 3, einen Kondensator 2, eine Steuereinrichtung 10 und eine Energiequelle 11. Der Kondensator 2 ist mittels elektrischer Leitungen 21 mit dem Teilvolumen 3 verbunden. Zudem ist der Kondensator mit der Steuereinrichtung 10 und der Energiequelle 11 verbunden, wobei die Steuereinrichtung 10 das Laden des Kondensators 2 über die Energiequelle 11 und das Entladen des Kondensators 2 hin zum Teilvolumen 3 kontrolliert. Die Steuereinrichtung 10 kann zudem zum Austausch von Daten mit einer Steuervorrichtung der Verbrennungskraftmaschine 4 verbunden sein.

Die Energiequelle 11 kann bspw. eine Batterie, eine Lichtmaschine oder eine Energierückgewinnungsvorrichtung sein. Das Teilvolumen 3 ist ein Raum in der Abgasreinigungskomponente 1, der aus einem Bauteil der Abgasreinigungskomponente 1 oder aus einem Bereich zwischen den Bauteilen der Abgasreinigungskomponente 1 gebildet wird. Das Teilvolumen 3 ist dabei als der Raum definiert, der direkt durch den Energieeintrag aus dem Kondensator 2 erhitzt wird. Insbesondere ist das Teilvolumen 3 also der Raum, der von einem Strom des Kondensators 2 durchflossen wird.

Im Betrieb durchströmt das Abgas aus der Verbrennungskraftmaschine 4 die Abgasanlage 5, wobei nur ein geringer Teilstrom des Abgases durch den nebengeordneten Abgasstrang 7 fließt. Die Abzweigung des Abgases aus dem Hauptabgasstrang 20 in den nebengeordneten Abgasstrang 7 kann dabei sowohl aktiv gesteuert werden oder auch durch die Geometrie der Abgasanlage 5 vorgegeben sein. Der nebengeordnete Teilstrom des Abgases durchströmt die Abgasreinigungskomponente 1, wobei sich insbesondere Ruß- und/oder Kohlenstoff-Partikel in der Abgasreinigungskomponente 1 ablagern. Die Abgasreinigungskomponente 1 kann bspw. ein Filter sein, der ggf. eine katalytische Beschichtung aufweist.

Um den abgelagerten Ruß 17 umzusetzen, wird dem Teilvolumen 3 elektrische Energie aus dem Kondensator 2 über die elektrischen Leitungen 21 zugeführt. Die elektrische Energie erhitzt das Teilvolumen 3 auf eine Temperatur von mindestens 900 °C. Bei dieser Temperatur wird der abgelagerte Ruß umgesetzt. Da es sich bei der Umsetzung um eine exotherme Reaktion handelt, wird der das Teilvolumen umgebende Ruß 17 auch (indirekt) erhitzt, so dass sich in der Abgasreinigungskomponente 1 eine Ruß-Abbrennreaktion ausbreitet.

Das Zuführen der auf dem Kondensator 2 gespeicherten Energie erfolgt vorzugsweise nach Erreichen von Grenzwerten der Parameter der Verbrennungskraftanlage 4 oder der Abgasanlage 5. Parameter können bspw. die Partikelanzahl im Abgas, die Durchflussrate durch die Abgasreinigungskomponente 1 und/oder der Druckabfall über der Abgasreinigungskomponente 1 sein.

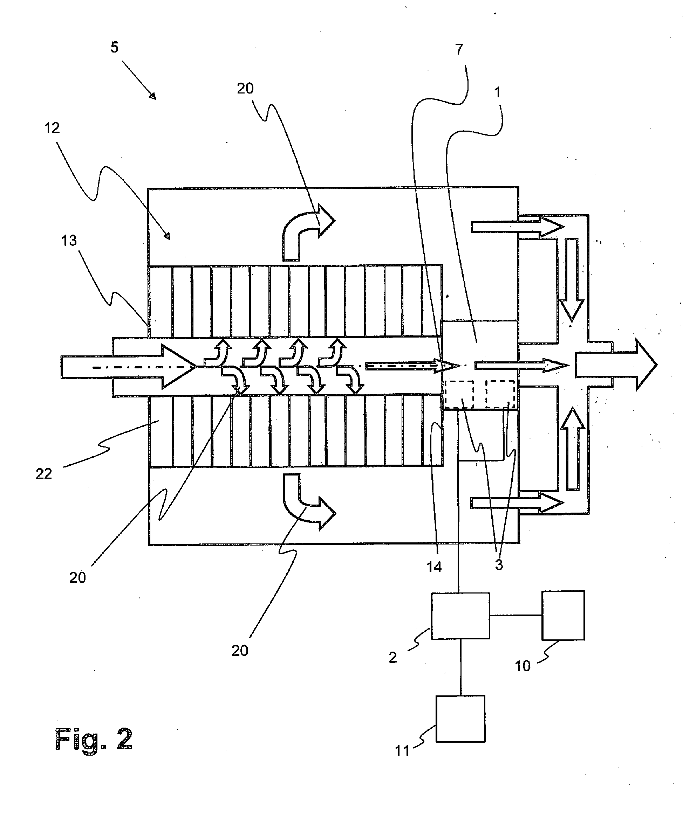

Fig. 2 zeigt schematisch einen Teil einer Abgasanlage 5. Die Abgasanlage 5 weist einen Radialkatalysator 12 mit einer ersten Stirnseite 13 und einer zweiten Stirnseite 14 auf, in dem Kanäle 22 angeordnet sind, die vom Abgas radial durchströmt werden. An der zweiten Stirnseite 14 des Radialkatalysators 12 ist eine Abgasreinigungskomponente 1 nach Art eines Impaktors angeordnet. Die Abgasreinigungskomponente 1 weist zwei Teilvolumina 3 auf, die mit dem Kondensator 2 verbunden sind. Der Kondensator ist zudem mit einer Energiequelle 11 und einer Steuereinrichtung 10 verbunden, wie es bereits zu Fig. 1 beschrieben ist.

Das Abgas fließt im Betrieb zentral durch die erste Stirnseite 13 in den Radialkatalysator 12 ein. Der Abgasstrom ist dabei mit den Pfeilen angedeutet. Die Abgasreinigungskomponente 1 stellt für das Abgas einen Strömungswiderstand dar, so dass das Abgas durch die radial angeordneten Kanäle 22 des Radialkatalysators 12 umgeleitet wird. Die trägeren Ruß- und/oder Kohlenstoffpartikel im Abgas können dieser Umlenkung nicht folgen und lagern sich in der Abgasreinigungskomponente 1 ab. Die Abgasreinigungskomponente 1 bildet somit lediglich einen nebengeordneten Abgasstrang 7, der nur von einem Teil des Abgases durchströmt wird. Zumindest ein Teil des abgelagerten Rußes 17 wird durch Einleiten zumindest eines Teils der auf dem Kondensator 2 gespeicherten Energie auf eine Temperatur von mindestens 900 °C erhitzt, so dass eine Ruß-Abbrennreaktion eingeleitet wird, die idealer Weise den in der Abgasreinigungskomponente 1 abgelagerten Ruß 17 komplett umsetzt.

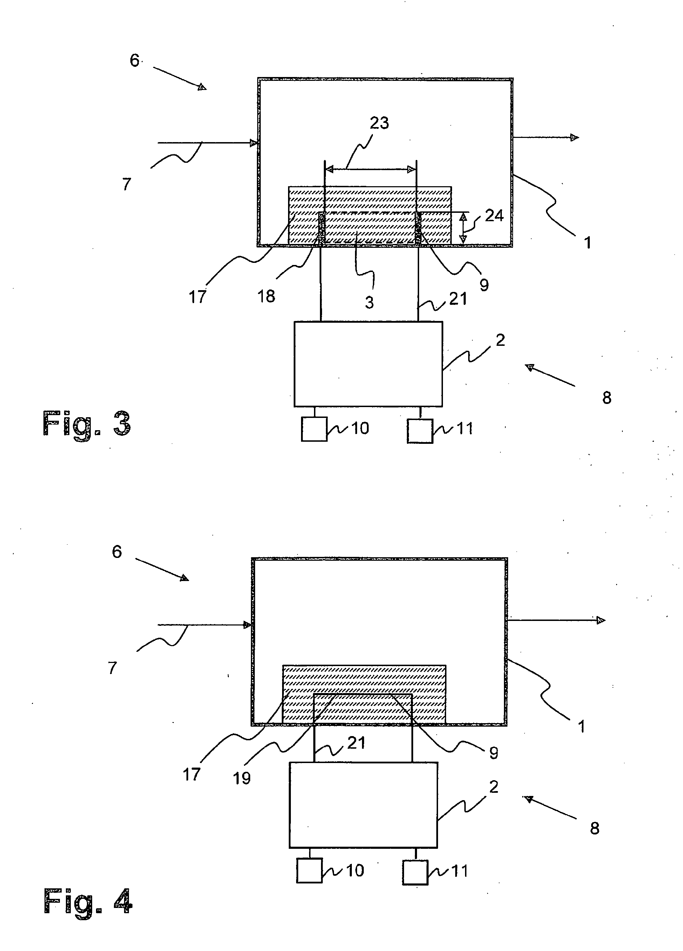

Die Fig. 3 und 4 zeigen schematisch zwei Ausführungsbeispiele der Abgasbehandlungsvorrichtung 6, die eine in einem nebengeordneten Abgasstrang 7 angeordnete Abgasreinigungskomponente 1 aufweist. Der Abgasreinigungskomponente 1 ist eine Zündvorrichtung 8 zugeordnet, die ein Zündelement 9, einen Kondensator 2, eine Energiequelle 11 und eine Steuereinrichtung 10 umfasst.

Bei dem in Fig. 3 dargestellten Ausführungsbeispiel wird das Zündelement 9 durch zwei Elektroden 18 gebildet. Die Elektroden 18 definieren durch ihre Breite, die sich in die Bildebene erstreckt, ihre Höhe 24 und ihren Abstand 23 zueinander ein Teilvolumen 3. Im Betrieb lagert sich Ruß 17 zwischen Elektroden 18 ab und füllt somit auch das Teilvolumen 3 aus. Der Kondensator 2 kann über die Elektroden 18 entladen werden, wodurch sich ein Stromfluss zwischen den Elektroden durch den Ruß 17 einstellt, der den Ruß 17 im Teilvolumen 3 auf eine Zündtemperatur von mindestens 900 °C erhitzt.

Bei dem in Fig. 4 dargestellten Ausführungsbeispiel wird das Teilvolumen 3 durch ein Zündelement 9 gebildet, welches als Heizdraht 19 ausgebildet ist. Das Teilvolumen 3 entspricht dabei dem Volumen des Heizdrahts 19, das sich aus der Länge und dem Durchmesser des Heizdrahtes 19 ergibt. Durch Entladen des Kondensators 2 über den Heizdraht 19 wird dieser erhitzt, wodurch der an den Heizdraht 19 angrenzende Ruß 17 ebenfalls in seiner Temperatur erhöht wird. Eine Abbrennreaktion wird somit in unmittelbarer Nähe zum Heizdraht 19 ausgelöst und kann sich auf den gesamten Ruß 17 ausweiten. Durch die Verwendung eines Heizdrahts 19 kann mit noch weniger Energie eine gezielte Temperaturerhöhung des Rußes 17 erreicht werden.

Die vorliegende Erfindung ermöglicht in einer energieeffizienten Weise eine vollständige Regeneration einer Abgasreinigungskomponente 1 in der Abgasanlage 5 einer Verbrennungskraftmaschine 4.

### Bezugszeichenliste

- 1: Abgasreinigungskomponente
- 2: Kondensator
- 3: Teilvolumen
- 4: Verbrennungskraftmaschine
- 5: Abgasanlage
- 6: Abgasbehandlungsvorrichtung
- 7: nebengeordneter Abgasstrang
- 8: Zündvorrichtung
- 9: Zündelement
- 10: Steuereinrichtung
- 11: Energiequelle
- 12: Radialkatalysator
- 13: erste Stirnseite
- 14: zweite Stirnseite
- 15: Impaktor
- 16: Fahrzeug
- 17: Ruß
- 18: Elektroden
- 19: Heizdraht
- 20: Hauptabgasstrang
- 21: Leitungen
- 22: Kanäle
- 23: Abstand
- 24: Höhe

## Patentansprüche

1. Verfahren zur Regeneration einer Abgasreinigungskomponente (1), die zumindest einen Wabenkörper, einen Filter, einen Abscheider, einen Katalysator-Trägerkörper, einen Adsorber, einen Impaktor (15) und/oder einen Strömungsmischer umfasst, umfassend wenigstens die folgenden Schritte:
i) Laden wenigstens eines Kondensators (2),
ii) Aufheizen eines Teilvolumens (3) oder mehrerer Teilvolumina (3) der Abgasreinigungskomponente (1) auf mindestens 900 °C durch Zuführen zumindest eines Teiles der auf dem Kondensator (2) gespeicherten Energie, wobei mindestens ein Zündelement (9), welches eine in der Abgasreinigungskomponente (1) angeordnete Elektrode (18) und/oder einen in der Abgasreinigungskomponente (1) angeordneten Heizdraht (19) umfasst, dem mindestens einen Teilvolumen (3) die Energie als elektrischen Energie zuführt, wobei Strom beim Zuführen der elektrischen Energie das Teilvolumen (3) durchfließt und der Stromfluss das Teilvolumen (3) direkt erhitzt.

2. Verfahren nach Anspruch 1, wobei der Strom mittels des wenigstens einen Kondensators (2) in weniger als 3 Sekunden, insbesondere in weniger als 1 Sekunde, in das Teilvolumen (3) eingebracht wird, wobei der Strom bevorzugt mehr als 50 Ampere, insbesondere mindestens 100 Ampere, beträgt so dass besonders bevorzugt eine Leistung von mehr als 500 Watt, insbesondere mehr als 900 Watt, erreicht wird.

3. Verfahren nach Anspruch 1 oder 2, wobei ausgehend von dem zumindest einen Teilvolumen (3) eine Partikel-Abbrennreaktion für ein größeres Volumen der Abgasreinigungskomponente (1) gestartet wird.

4. Verfahren nach einem der vorhergehenden Ansprüche, wobei dem Teilvolumen (3) höchstens 2.000 J elektrische Energie zugeführt wird.

5. Verfahren nach einem der vorhergehenden Ansprüche, wobei innerhalb von maximal 1 Sekunde mindestens 63,2 % der zuvor auf dem Kondensator (2) gespeicherten Energie der Abgasreinigungskomponente (1) zugeführt wird.

6. Verfahren nach einem der vorhergehenden Ansprüche, wobei in bei aufeinander folgenden Aufheizschritten verschiedene Teilvolumina (3) aufgeheizt werden.

7. Verfahren nach einem der vorhergehenden Ansprüche, wobei mindestens ein Parameter einer der Abgasreinigungskomponente (1) zugeordnete Verbrennungskraftmaschine (4) oder Abgasanlage (5) gemessen oder berechnet wird, wobei bei Erreichen eines Grenzwertes des mindestens einen Parameters zumindest ein Teil der auf dem Kondensator (2) gespeicherten Energie dem Teilvolumen (3) zugeführt wird.

8. Verfahren nach einem der vorhergehenden Ansprüche, wobei der mindestens eine Kondensator (2) mit einer Anfangsleistung von höchstens 30 W geladen wird.

9. Abgasbehandlungsvorrichtung (6) für einen nebengeordneten Abgasstrang (7) einer Abgasanlage (5) einer Verbrennungskraftmaschine (4), wobei durch den nebengeordneten Abgasstrang (7) maximal 40 %, insbesondere maximal 10%, des Abgases hindurch geleitet wird, umfassend eine Abgasreinigungskomponente (1), die zumindest einen Wabenkörper, einen Filter, einen Abscheider, einen Katalysator-Trägerkörper, einen Adsorber, einen Impaktor (15) und/oder einen Strömungsmischer umfasst und die ein Teilvolumen (3) oder mehrere Teilvolumina (3) mit jeweils höchstens 1.000 mm³ Volumen aufweist, und wenigstens eine Zündvorrichtung (8) mit mindestens einem Zündelement (9), mindestens einem Kondensator (2), mindestens einer Energiequelle (11) und mindestens einer Steuereinrichtung (10), wobei das mindestens eine Zündelement (9) dem zumindest einen Teilvolumen (3) zugeordnet ist und eine in der Abgasreinigungskomponente (1) angeordnete Elektrode (18) und/oder einen in der Abgasreinigungskomponente (1) angeordneten Heizdraht (19) umfasst.

10. Abgasbehandlungsvorrichtung (6) nach Anspruch 9, wobei das Zündelement (9) als Heizdraht (19) ausgebildet ist, dessen Volumen bevorzugt dem Teilvolumen (3) entspricht, und wobei der Heizdraht (19) mit höchstens 30 mm, insbesondere höchstens 20 mm, Länge und höchstens 2 mm, insbesondere höchstens 1 mm, Durchmesser ausgeführt ist.

11. Abgasbehandlungsvorrichtung (6) nach Anspruch 9, wobei das Zündelement (9) durch zwei Elektroden (18) gebildet ist, die das Teilvolumen (3) begrenzen und eine Höhe (24) von höchstens 8 mm, insbesondere höchstens 4 mm, und eine Breite von höchstens 5 mm, insbesondere höchstens 4 mm, aufweisen und mit einem Abstand (23) zueinander von höchstens 25 mm, insbesondere höchstens 20 mm, angeordnet sind.

12. Abgasbehandlungsvorrichtung (6) nach einem der Ansprüche 9 bis 11, wobei der Kondensator (2) eine Kapazität von höchstens 500 F aufweist.

13. Abgasbehandlungsvorrichtung (6) nach einem der Ansprüche 9 bis 12, wobei die Abgasanlage (5) einen Radialkatalysatör (12) mit einer ersten Stirnseite (13) und einer zweiten Stirnseite (14) umfasst und die Abgasreinigungskomponente (1) als Impaktor (15) der zweiten Stirnseite (14) zugeordnet ist.

14. Abgasbehandlungsvorrichtung (6) nach Anspruch 13, wobei der Radialkatalysator (12) in einem Hauptstrom und der Impaktor (15) in einem Nebenstrom positioniert ist, der bevorzugt als Tiefenfilter, insbesondere als Filterplatte oder Filterschaum, und/oder nach Art einer Prallplatte für Partikel ausgebildet ist.

15. Fahrzeug (16), umfassend eine Abgasbehandlungsvorrichtung (6) gemäß einem der Ansprüche 9 bis 14, wobei die Abgasbehandlungsvorrichtung (6) zur Durchführung des Verfahrens gemäß Ansprüchen 1 bis 8 eingerichtet ist.

## Claims

1. Method for the regeneration of an exhaust-gas purification component (1), which comprises at least a honeycomb body, filter, separator, catalytic converter substrate body, adsorber, impactor (15) and/or a flow mixer, comprising at least the following steps:
i) charging at least one capacitor (2),
ii) heating a sub-volume (3) or a plurality of sub-volumes (3) of the exhaust-gas purification component (1) to at least 900 °C through the supply of at least a part of the energy stored in the capacitor (2), wherein at least one ignition element (9), which comprises an electrode (18) being arranged in the exhaust-gas purification component (1) and/or a heating wire (19) being arranged in the exhaust-gas purification component (1), supplies the energy as electrical energy to the at least one sub-volume (3), wherein when electrical energy is supplied electrical current flows through the sub-volume (3) and directly heats the sub-volume (3).

2. Method as claimed in claim 1, wherein the current is introduced into the sub-volume (3) by means of the at least one capacitor (2) in less than 3 seconds, preferably in less than 1 second, wherein the current preferably has a value of greater than 50 Amperes, preferably at least 100 Ampere, so that particularly preferable a power of greater than 500 Watts, in particular greater than 900 Watts, is attained.

3. Method as claimed in claim 1 or 2, wherein, proceeding from the at least one sub-volume (3), a particle burn-off reaction is started for a larger volume of the exhaust-gas purification component (1).

4. Method as claimed in one of the preceding claims, wherein at most 2,000 J of electrical energy is supplied to the sub-volume (3).

5. Method as claimed in one of the preceding claims, wherein at least 63.2% of the energy previously stored in the capacitor (2) is supplied to the exhaust-gas purification component (1) within a maximum of 1 second.

6. Method as claimed in one of the preceding claims, wherein different sub-volumes (3) are heated in successive heating steps.

7. Method as claimed in one of the preceding claims, wherein at least one parameter of an internal combustion engine (4) or exhaust system (5) assigned to the exhaust-gas purification component (1) is measured or calculated, wherein when a threshold value of the at least one parameter is reached, at least a part of the energy stored in the capacitor (2) is supplied to the sub-volume (3).

8. Method as claimed in one of the preceding claims, wherein the at least one capacitor (2) is charged with an initial power of at most 30 W.

9. Exhaust-gas treatment device (6) for a secondary exhaust tract (7) of an exhaust system (5) of an internal combustion engine (4), wherein a maximum of 40%, in particular a maximum of 10%, of the exhaust gas is conducted through the secondary exhaust tract (7), comprising an exhaust-gas purification component (1), which comprises at least a honeycomb body, filter, separator, catalytic converter substrate body, adsorber, impactor (15) and/or a flow mixer and which has at least a sub-volume (3) or a plurality of sub-volumes (3) with in each case a volume of at most 1,000 mm³, and at least one ignition device (8) with at least one ignition element (9), at least one capacitor (2), at least one energy source (11) and at least one control device (10), wherein the at least one ignition element (9) is assigned to the at least one sub-volume (3) and comprises an electrode (18) being arranged in the exhaust-gas purification component (1) and/or a heating wire (19) being arranged in the exhaust-gas purification component (1).

10. Exhaust-gas treatment device (6) as claimed in claim 9, wherein the ignition element (9) is formed as heating wire (19) which has a volume that preferably corresponds to the sub-volume (3), and wherein the heating wire (19) is formed with a length of at most 30 mm, in particular at most 20 mm, and with a diameter of at most 2 mm, in particular at most 1 mm.

11. Exhaust-gas treatment device (6) as claimed in claim 9, wherein the ignition element (9) is formed by two electrodes (18), which delimit the sub-volume (3) and which have a height (24) of at most 8 mm, in particular at most 4 mm, and a width of at most 5 mm, in particular at most 4 mm, and which are arranged with a spacing (23) to one another of at most 25 mm, in particular at most 20 mm.

12. Exhaust-gas treatment device (6) as claimed in one of claims 9 to 11, wherein the capacitor (2) has a capacitance of at most 500 F.

13. Exhaust-gas treatment device (6) as claimed in one of claims 9 to 12, wherein the exhaust system (5) comprises a radial catalytic converter (12) with a first end side (13) and with a second end side (14), and the exhaust-gas purification component (1) is assigned, as an impactor (15), to the second end side (14).

14. Exhaust-gas treatment device (6) as claimed in claim 13, wherein the radial catalytic converter (12) is positioned in the main exhaust-gas flow and the impactor (15) in the secondary exhaust-gas flow, wherein the impactor (15) is in the form of a depth filter, in particular a filter plate or a filter foam, and/or in the manner of an impact plate for particles.

15. Vehicle (16), comprising an exhaust-gas treatment device (6) as claimed in one of claims 9 to 14, wherein the exhaust-gas treatment device (6) is set up for carrying out the method as claimed in claims 1 to 8.

## Revendications

1. Procédé de régénération d'un composant d'épuration de gaz d'échappement (1), qui comprend au moins un corps en nid d'abeilles, un filtre, un séparateur, un corps de support de catalyseur, un adsorbeur, un impacteur (15) et/ou un mélangeur de flux, comprenant au moins les étapes suivantes :
i) charge d'au moins un condensateur (2) ;
ii) chauffage d'un volume partiel (3) ou de plusieurs volumes partiels (3) du composant d'épuration de gaz d'échappement (1) à au moins 900 °C par acheminement d'au moins une partie de l'énergie accumulée dans le condensateur (2), au moins un élément d'allumage (9), qui comprend une électrode (18) disposée dans le composant d'épuration de gaz d'échappement (1) et/ou un filament chauffant (19) disposé dans le composant d'épuration de gaz d'échappement (1), acheminant l'énergie sous forme d'énergie électrique à l'au moins un volume partiel (3), le courant traversant le volume partiel (3) lors de l'alimentation en énergie électrique, et le flux de courant chauffant directement le volume partiel (3).

2. Procédé selon la revendication 1, dans lequel le courant est introduit dans le volume partiel (3) au moyen de l'au moins un condensateur (2) en moins de 3 secondes, en particulier en moins de 1 seconde, le courant mesurant de préférence plus de 50 Ampères, en particulier au moins 100 Ampères, de sorte que l'on obtienne particulièrement préférablement une puissance de plus de 500 Watt, en particulier de plus de 900 Watt.

3. Procédé selon la revendication 1 ou 2, dans lequel à partir de l'au moins un volume partiel (3), une réaction de combustion de particules est amorcée pour un plus grand volume du composant d'épuration de gaz d'échappement (1).

4. Procédé selon l'une quelconque des revendications précédentes, dans lequel au maximum 2000 J d'énergie électrique sont acheminés au volume partiel (3).

5. Procédé selon l'une quelconque des revendications précédentes, dans lequel au moins 63,2 % de l'énergie accumulée préalablement dans le condensateur (2) sont acheminés au composant d'épuration de gaz d'échappement (1) en l'espace d'1 seconde au maximum.

6. Procédé selon l'une quelconque des revendications précédentes, dans lequel différents volumes partiels (3) sont chauffés dans des étapes de chauffage successives.

7. Procédé selon l'une quelconque des revendications précédentes, dans lequel au moins un paramètre d'un moteur à combustion interne (4) ou d'une installation de gaz d'échappement (5) associé(e) au composant d'épuration de gaz d'échappement (1) est mesuré ou calculé, et à l'obtention d'une valeur limite de l'au moins un paramètre, au moins une partie de l'énergie accumulée dans le condensateur (2) étant acheminée au volume partiel (3).

8. Procédé selon l'une quelconque des revendications précédentes, dans lequel l'au moins un condensateur (2) est chargé avec une puissance initiale de 30 W au maximum.

9. Dispositif de traitement de gaz d'échappement (6) pour une ligne d'échappement adjacente (7) d'une installation de gaz d'échappement (5) d'un moteur à combustion interne (4), au maximum 40 %, en particulier au maximum 10 %, du gaz d'échappement étant guidés à travers la ligne d'échappement adjacente (7), comprenant un composant d'épuration de gaz d'échappement (1) qui comprend au moins un corps en nid d'abeilles, un filtre, un séparateur, un corps de support de catalyseur, un adsorbeur, un impacteur (15) et/ou un mélangeur de flux et qui présente un volume partiel (3) ou plusieurs volumes partiels (3) ayant chacun au maximum un volume de 1000 mm³, et au moins un dispositif d'allumage (8) avec au moins un élément d'allumage (9), au moins un condensateur (2), au moins une source d'énergie (11) et au moins un dispositif de commande (10), l'au moins un élément d'allumage (9) étant associé à l'au moins un volume partiel (3) et comprenant une électrode (18) disposée dans le composant d'épuration de gaz d'échappement (1) et/ou un filament chauffant (19) disposé dans le composant d'épuration de gaz d'échappement (1).

10. Dispositif de traitement de gaz d'échappement (6) selon la revendication 9, dans lequel l'élément d'allumage (9) est réalisé sous forme de filament chauffant (19), dont le volume correspond de préférence au volume partiel (3), et dans lequel le filament chauffant (19) est réalisé avec une longueur maximale de 30 mm, en particulier une longueur maximale de 20 mm, et un diamètre maximal de 2 mm, en particulier un diamètre maximal de 1 mm.

11. Dispositif de traitement de gaz d'échappement (6) selon la revendication 9, dans lequel l'élément d'allumage (9) est formé par deux électrodes (18) qui limitent le volume partiel (3) et qui présentent une hauteur maximale (24) de 8 mm, en particulier une hauteur maximale de 4 mm, et une largeur maximale de 5 mm, en particulier une largeur maximale de 4 mm, et qui sont disposées à une distance maximale (23) l'une de l'autre de 25 mm, en particulier à une distance maximale l'une de l'autre de 20 mm.

12. Dispositif de traitement de gaz d'échappement (6) selon l'une quelconque des revendications 9 à 11, dans lequel le condensateur (2) présente une capacité maximale de 500 F.

13. Dispositif de traitement de gaz d'échappement (6) selon l'une quelconque des revendications 9 à 12, dans lequel l'installation de gaz d'échappement (5) comprend un catalyseur radial (12) avec un premier côté frontal (13) et un deuxième côté frontal (14) et le composant d'épuration de gaz d'échappement (1) est associé, en tant qu'impacteur (15), au deuxième côté frontal (14).

14. Dispositif de traitement de gaz d'échappement (6) selon la revendication 13, dans lequel le catalyseur radial (12) est positionné dans un courant principal et l'impacteur (15) est positionné dans un courant secondaire, qui est réalisé de préférence sous forme de filtre de profondeur, en particulier sous forme de plaque filtrante ou de mousse filtrante, et/ou à la manière d'une plaque d'impact pour particules.

15. Véhicule (16), comprenant un dispositif de traitement de gaz d'échappement (6) selon l'une quelconque des revendications 9 à 14, dans lequel le dispositif de traitement de gaz d'échappement (6) est conçu pour mettre en oeuvre le procédé selon les revendications 1 à 8.
